(19) **Europäisches Patentamt**

**European Patent Office**

**Office européen des brevets**

(11) **EP 0 854 171 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.⁷: **C08L 21/00**, C08C 19/20
// (C08L21/00, 15:00)

(21) Anmeldenummer: **98100051.6**

(22) Anmeldetag: **03.01.1998**

(54) **Modifizierte Kautschukgele enthaltende Kautschukmischungen**

Rubber compositions containing modified rubber gels

Compositions de caoutchouc contenant des gels de caoutchouc modifiés

(84) Benannte Vertragsstaaten:
**DE FR GB IT**

(30) Priorität: **17.01.1997 DE 19701489**

(43) Veröffentlichungstag der Anmeldung:
**22.07.1998 Patentblatt 1998/30**

(73) Patentinhaber: **BAYER AG**
**51368 Leverkusen (DE)**

(72) Erfinder:
• **Obrecht, Werner, Dr.**
 **47447 Moers (DE)**
• **Scholl, Thomas, Dr.**
 **51469 Bergisch Gladbach (DE)**
• **Eisele, Ulrich, Dr.**
 **51375 Leverkusen (DE)**
• **Jeske, Winfried**
 **51399 Burscheid (DE)**

(56) Entgegenhaltungen:
**EP-A- 0 533 015**          **DE-A- 4 220 563**

**Beschreibung**

Die Erfindung betrifft Mischungen aus C=C-Doppelbindungen enthaltenden Kautschuken und mit vulkanisationsaktiven Chemikalien modifizierten Kautschukgelen sowie daraus hergestellte Vulkanisate. Die Vulkanisate zeigen eine ungewöhnlich hohe verstärkende Wirkung als Füllstoff in Kautschukvulkanisaten sowie eine ungewöhnlich geringe dynamische Dämpfung bei höheren Temperaturen und eignen sich daher besonders gut für die Herstellung rollwiderstandsarmer Kfz-Reifenlaufflächen.

Zur Reduktion des Rollwiderstands von Reifen sind in der Literatur eine Vielzahl von Maßnahmen beschrieben worden u.a. auch die Verwendung von Polychloroprengelen (EP-A 405 216) und Polybutadiengelen (DE-A 42 20 563) in Reifenlaufflächen aus C=C-Doppelbindungen enthaltenden Kautschuken. Nachteilig bei der Verwendung beider Kautschukgele als Füllstoffe in Kautschukvulkanisaten ist ihre im Vergleich zu Ruß relativ geringe verstärkende Wirkung. Die als Verarbeitungshilfsmittel beschriebenen schwefelvernetzten Kautschukgele der GB-PS 1 078 400 zeigen keine verstärkenden Eigenschaften und sind daher als Füllstoffersatz in Reifenlaufflächen ungeeignet.

Es wurde jetzt gefunden, daß spezielle nachträglich chemisch modifizierte Kautschukgele in Vulkanisaten aus C=C-doppelbindungshaltigen Kautschuken eine überraschend hohe Verstärkerwirkung als Füllstoff besitzen und daher zum Beispiel zur Herstellung rollwiderstandsarmer Reifen besser geeignet sind als die ursprünglichen unmodifizierten Kautschukgele.

Gegenstand der Erfindung sind daher Mischungen aus mindestens einem mit gegenüber C=C-Doppelbindungen reaktiven schwefelhaltigen Verbindungen (vulkanisationsaktiven Chemikalien) modifiziertem Kautschukgel (A) und mindestens einem doppelbindungshaltigen Kautschuk (B), wobei der Anteil an modifiziertem Kautschukgel 1 bis 100 Gew.-Teile, vorzugsweise 5 bis 75 Gew.-Teile, bezogen auf 100 Gew.-Teile C=C-doppelbindungshaltigem Kautschuk beträgt, sowie gegebenenfalls weiteren Füllstoffen und Kautschukhilfsmitteln.

Unter Kautschukgelen werden Mikrogele (A) verstanden, hergestellt durch Vernetzung von

| | |
|---|---|
| BR - | Polybutadien |
| ABR - | Butadien/Acrylsäure-$C_{1-4}$-alkylester-Copolymere |
| IR - | Polyisopren |
| NR - | Naturkautschuk |
| SBR - | Styrol/Butadien-Copolymerisate mit Styrolgehalten von 1 bis 60, vorzugsweise 2 bis 50 Gew.-% |
| XSBR - | Styrol/Butadien-Copolymerisate und Pfropfpolymerisate mit weiteren ungesättigten polaren Monomeren, wie Acrylsäure, Methacrylsäure, Acrylamid, Methacrylamid, N-Methyoxymethyl-methacrylsäureamid, N-Acetoxymethyl-methacrylsäureamid, Acrylnitril, Hydroxyethylacrylat und/oder Hydroxyethylmethacrylat mit Styrolgehalten von 2 bis 50 Gew.-% und Gehalten an einpolymerisierten polaren Monomeren von 1 bis 20 Gew.-%, |
| IIR - | Isobutylen/Isopren-Copolymerisate mit Isoprengehalten von 0,5 bis 10 Gew.-% |
| BRIIR- | bromierte Isobutylen/Isopren-Copolymerisate mit Bromgehalten von 0,1 bis 10 Gew.-% |
| CIIIR - | chlorierte Isobutylen/Isopren-Copolymerisate mit Chlorgehalten von 0,1 bis 10 Gew.-% |
| NBR - | Butadien/Acrylnitril-Copolymere mit Acrylnitrilgehalten von 5 bis 60, vorzugsweise 10 bis 50 Gew.-% |
| HNBR- | teilhydrierter NBR-Kautschuk, in dem bis zu 98,5 % der Doppelbindungen hydriert sind |
| EPDM - | Ethylen/Propylen/Dien-Copolymerisate |

oder Mischungen davon.

Die mit vulkanisationsaktiven Chemikalien oberflächenmodifizierten Kautschukgele besitzen Teilchendurchmesser von 5 bis 1000 nm, bevorzugt 20 bis 600 nm (DVN-Wert nach DIN 53 206) und Quellungsindizes ($Q_i$) in Toluol von 1 bis 15, vorzugsweise 1 bis 10. Der Quellungsindex wird aus dem Gewicht des lösungsmittelhaltigen Gels (nach Zentrifugation mit 20.000 Upm) und dem Gewicht des trockenen Gels berechnet:

$$Q_i = \text{Nachgewicht des Gels/Trockengewicht des Gels.}$$

Zur Ermittlung des Quellungsindex läßt man z.B. 250mg Gel in 25ml Toluol 24 Stunden unter Schütteln quellen. Das Gel wird abzentrifugiert und gewogen und anschließend bei 70°C bis zur Gewichtskonstanz getrocknet und nochmals gewogen.

Die Herstellung der unvernetzten Kautschuk-Ausgangsprodukte erfolgt bevorzugt durch Emulsionspolymerisation. Siehe hierzu z.B. I. Franta, Elastomers and Rubber Compounding Materials, Elsevier, Amsterdam 1989, Seite 88 bis 92.

Die Vernetzung zu Kautschukgelen erfolgt im Latexzustand und kann einerseits während der Polymerisation durch Fortführung der Polymerisation bis zu hohen Umsätzen oder im Monomerzulaufverfahren durch Polymerisation bei hohen internen Umsätzen erfolgen oder im Anschluß an die Polymerisation durch Nachvernetzung oder auch durch die Kombination beider Prozesse durchgeführt werden. Auch die Herstellung durch Polymerisation in Abwesenheit von Reglern ist möglich.

Die Vernetzung des Kautschuks kann auch durch Copolymerisation mit vernetzend wirkenden multifunktionellen Verbindungen erreicht werden. Bevorzugte multifunktionelle Comonomere sind Verbindungen mit mindestens zwei, vorzugsweise 2 bis 4, copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleinimid und/oder Triallyltrimellitat. Darüber hinaus kommen in Betracht: die Acrylate und Methacrylate von mehrwertigen, vorzugsweise 2 bis 4-wertigen, $C_2$ bis $C_{10}$-Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit und ungesättigte Polyester aus aliphatischen Di- und Polyolen sowie Maleinsäure, Fumarsäure und/oder Itaconsäure.

Die Vernetzung der Kautschuke zu Kautschukgelen kann auch in Latexform durch Nachvernetzung mit vernetzend wirkenden Chemikalien erfolgen. Geeignete vernetzend wirkende Chemikalien sind beispielsweise organische Peroxide, z.B. Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-dihydroperoxid, Dibenzoylperoxid, Bis-(2,4-dichlorbenzoyl)peroxid, t-Butylperbenzoat, sowie organische Azoverbindungen, wie Azo-bis-isobutyronitril und Azo-bis-cyclohexannitril, sowie Di- und Polymercaptoverbindungen, wie Dimercaptoethan, 1,6-Dimercaptohexan, 1,3,5-Trimercaptotriazin, und Mercapto-terminierte Polysulfidkautschuke, wie Mercapto-terminierte Umsetzungsprodukte von Bis-chlorethylformal mit Natriumpolysulfid. Die optimale Temperatur zur Durchführung der Nachvernetzung ist naturgemäß von der Reaktivität des Vernetzers abhängig und kann bei Temperaturen von Raumtemperatur bis ca. 170°C gegebenenfalls unter erhöhtem Druck durchgeführt werden. Siehe hierzu Houben-Weyl, Methoden der organischen Chemie, 4. Auflage, Bd. 14/2 Seite 848. Besonders bevorzugte Vernetzungsmittel sind Peroxide.

Vor, während oder nach der Nachvernetzung in Latexform kann gegebenenfalls auch eine Teilchenvergrößerung durch Agglomeration durchgeführt werden.

Auch Kautschuke, die in organischen Lösungsmitteln hergestellt wurden, können als Ausgangsprodukte zur Herstellung der Kautschukgele dienen. In diesem Fall empfiehlt es sich, die Lösung des Kautschuks gegebenenfalls unter Zuhilfenahme eines Emulgators in Wasser zu emulgieren und die so erhaltene Emulsion vor oder nach der Entfernung des organischen Lösungsmittels mit geeigneten Vernetzern nachträglich zu vernetzen. Als Vernetzer eignen sich die zuvor genannten Vernetzer.

Unter dem Begriff "Modifizierung mit vulkanisationsaktiven Chemikalien" wird die chemische Umsetzung der bereits vernetzten Kautschukteilchen mit gegenüber C=C-Doppelbindungen reaktiven schwefelhaltigen Chemikalien verstanden.

Dies sind insbesondere solche Verbindungen, mit deren Hilfe schwefelhaltige reaktive Gruppen, wie z.B. Mercapto-, Dithiocarbamat-, Polysulfid-, Xanthogenat-, Thiobenzthiazol- und/oder Dithiophosphorsäuregruppen, an den Kautschukgelteilchen chemisch gebunden werden können.

Besonders bevorzugte Modifizierungsreaktionen sind die Umsetzung der bereits vernetzten Kautschukteilchen mit:

elementarem Schwefel, Schwefelwasserstoff und/oder Alkylpolymercaptanen, wie 1,2-Dimercaptoethan oder 1,6-Dimercaptohexan,
desweiteren mit Dialkyl- und Dialkylaryldithiocarbamaten, wie den Alkalisalzen von Dimethyldithiocarbamat und/oder Dibenzyldithiocarbamat, ferner mit Alkyl- und Arylxanthogenaten, wie Kaliumethylxanthogenat und Na-isopropylxanthogenat, sowie die Umsetzung mit den Alkali- oder Erdalkalisalzen der Dibutyldithiophosphorsäure und Dioctyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindungen können Radikalstarter, wie anorganische und organische Peroxide und/oder Azoinitiatoren, zugesetzt werden.

Die Modifizierungsreaktionen können bei Temperaturen von 0 bis 180°C, bevorzugt 20 bis 95°C, gegebenenfalls unter Druck von 1 bis 30 bar, durchgeführt werden. Die Modifizierungen können an den Kautschukgelen in Substanz oder in Form ihrer Dispersionen vorgenommen werden, wobei im letzteren Fall inerte, organische Lösungsmittel oder auch Wasser als Reaktionsmedium verwendet werden können. Besonders bevorzugt wird die Modifizierung in wäßriger Dispersion des vernetzten Kautschuks durchgeführt.

Die Menge des eingesetzten Modifizierungsmittels richtet sich nach dessen Wirksamkeit und der im Einzelfall gestellten Anforderung und liegt im Bereich von 0,05 bis 20 Gew.-%, bezogen auf gesamte Menge an eingesetztes Kautschukgel. Besonders bevorzugt sind 0,5 bis 5 Gew.-%, bezogen auf gesamte Menge an Kautschukgel.

Bevorzugte Kautschuke (B) enthalten Doppelbindungen entsprechend Iodzahlen von mindestens 2, vorzugsweise 5 bis 470. Die Bestimmung der Iodzahlen erfolgt im allgemeinen durch Addition von Iodchlorid in Essigsäure nach Wijs, DIN 53 241, Teil 1. Die Iodzahl definiert die Iodmenge in Gramm, die von 100 g Substanz chemisch gebunden wird.

Die Kautschuke (B) besitzen in der Regel Mooney-Viskositäten ML 1+4/100°C (DIN 53 523) von 10 bis 150, vorzugsweise 20 bis 120.

Bevorzugte Kautschuke (B) sind neben Naturkautschuk auch Synthesekautschuke. Bevorzugte Synthesekautschuke sind beispielsweise bei I. Franta, Elastomers and Rubber Compounding Materials, Elsevier, New York 1989, oder auch in Ullmann's Encyclopedia of Industrial Vol. A 23, VCH Verlagsgesellschaft, Weinheim 1993, beschrieben. Sie umfassen u.a.

| | |
|---|---|
| BR - | Polybutadien |
| ABR - | Butadien/Acrylsäure-$C_{1-4}$-alkylester-Copolymere |
| IR - | Polyisopren |
| SBR - | Styrol/Butadien-Copolymerisate mit Styrolgehalten von 1 bis 60, vorzugsweise 2 bis 50 Gew.-% |
| XSBR - | Styrol/Butadien-Copolymerisate und Pfropfpolymerisate mit Acrylsäure, Methacrylsäure, Acrylnitril, Hydroxyethylacrylat und/oder Hydroxyethylmethacrylat mit Styrolgehalten von 2 bis 50 Gew.-% und Gehalten an einpolymerisierten polaren Monomeren von 1 bis 30 Gew.-%, |
| IIR - | Isobutylen/Isopren-Copolymerisate |
| NBR - | Butadien/Acrylnitril-Copolymere mit Acrylnitrilgehalten von 5 bis 60, vorzugsweise 10 bis 50 Gew.-% |
| HNBR- | teilhydrierter NBR-Kautschuk, in dem bis zu 98,5 % der Doppelbindungen hydriert sind |
| EPDM - | Ethylen/Propylen/Dien-Copolymerisate, |

sowie Mischungen dieser Kautschuke.

Für die Herstellung von insbesondere Kfz-Reifen sind vor allem Naturkautschuk, Emulsions-SBR- sowie Lösungs-SBR-Kautschuk mit einer Glastemperatur oberhalb von -50°C, die gegebenenfalls mit Silylethern oder anderen funktionellen Gruppen modifiziert sein können, wie z.B. in der EP-A 447 066 beschrieben, daneben Polybutadienkautschuk mit hohem cis-1,4-Gehalt, der mit Katalysatoren auf Basis Ni, Co, Ti oder Nd hergestellt wird, sowie Polybutadienkautschuk mit einem Vinylgehalt von 0 bis 75 % und deren Mischungen von Interesse.

Die erfindungsgemäßen Kautschukmischungen aus dem Styrol/Butadien-Kautschukgel (A) und den doppelbindungshaltigen Kautschuken (B) können zusätzlich weitere Füllstoffe enthalten.

Besonders geeignete Füllstoffe zur Herstellung der erfindungsgemäßen Kautschukmischungen und Vulkanisate sind

- Ruße. Die hierbei zu verwendenden Ruße sind nach dem Flammruß-, Furnaceoder Gasruß-Verfahren hergestellt und besitzen BET-Oberflächen von 20 bis 200 $m^2$/g, wie z.B. SAF-, ISAF-, IISAF-, HAF-, FEF- oder GPF-Ruße.

- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 $m^2$/g (BET-Ober-fläche) und mit Primärteilchengrößen von 5 bis 400 nm. Die Kieselsäuren können gegebenenfalls auch als Mischoxide mit anderen Metalloxiden, wie Al-, Mg-, Ca-, Ba-, Zn- und Tioxiden, vorliegen.

- Synthetische Silikate, wie Aluminiumsilikat, Erdalkalisilikate wie Magnesiumsilikat oder Calciumsilikat, mit BET-Oberflächen von 20 bis 400 $m^2$/g und Primärteilchendurchmessern von 10 bis 400 nm.

- Natürliche Silikate, wie Kaolin und andere natürlich vorkommende Kieselsäuren.

- Metalloxide, wie Zinkoxid, Calciumoxid, Magnesiumoxid, Aluminiumoxid.

- Metallcarbonate, wie Magnesiumcarbonat, Calciumcarbonat, Zinkcarbonat.

- Metallsulfate, wie Calciumsulfat, Bariumsulfat.

- Metallhydroxide, wie Aluminiumhydroxid und Magnesiumhydroxid.

- Glasfasern und Glasfaserprodukte (Matten, Stränge) oder Mikroglaskugeln.

- Kautschukgele auf Basis Polychloropren und/oder Polybutadien mit Teilchengrößen von 5 bis 1000 nm.

Die genannten Füllstoffe können alleine oder im Gemisch eingesetzt werden. In einer besonders bevorzugten Ausführung des Verfahrens werden 10 bis 100 Gew.-Teile modifiziertes Kautschukgel (A), gegebenenfalls zusammen mit 0,1 bis 100 Gew.-Teilen Ruß und/oder 0,1 bis 100 Gew.-Teilen helle Füllstoffe, jeweils bezogen auf 100 Gew.-Teile doppelbindungshaltigem Kautschuk (B), zur Herstellung der Mischungen eingesetzt.

Die erfindungsgemäßen Kautschukmischungen können weitere Kautschukhilfsmittel enthalten wie Vernetzer, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Füllstoffaktivatoren, wie Triethanolamin, Polyethylenglykol, Hexantriol, Bis-(triethoxysilylpropyl)-tetrasulfid, die der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1 bis 50 Gew.-%, bezogen auf eingesetzte Mengen an Kautschuk (B).

Als übliche Vernetzer können Schwefel, Schwefelspender oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, -sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0,1 bis 5 Gew.-%, bezogen auf gesamte Menge an Kautschuk (B) eingesetzt.

Die Vulkaniation der erfindungsgemäßen Kautschukmischungen kann bei Temperaturen von 100 bis 200°C, bevorzugt 130 bis 180°C, gegebenenfalls unter Druck von 10 bis 200 bar erfolgen.

Die erfindungsgemäßen Kautschukmischungen aus modifiziertem Kautschukgel (A) und den C=C-doppelbindungshaltigen Kautschuken (B) können auf verschiedene Weise hergestellt werden: zum einen ist selbstverständlich möglich, die festen Einzelkomponenten zu mischen. Dafür geeignete Aggregate sind beispielsweise Walzen, Innenmischer oder Mischextruder. Aber auch das Mischen durch Vereinigen der Latices der unvernetzten Kautschuke ist möglich. Die Isolierung der so hergestellten erfindungsgemäßen Mischungen kann, wie üblich, durch Eindampfen, Ausfällen oder Gefrierkoagulation (vgl. US-PS 2.187.146) erfolgen. Durch Einmischen von Füllstoffen in die Latexmischungen und anschließende Aufarbeitung können die erfindungsgemäßen Mischungen direkt als Kautschuk-/Füllstoff-Formulierung erhalten werden.

Die weitere Abmischung der Kautschukmischungen aus dem modifizierten Kautschukgel (A) und den doppelbindungshaltigen Kautschuken (B) mit zusätzlichen Füllstoffen sowie gegebenenfalls Kautschukhilfsmitteln kann in üblichen Mischaggregaten, wie Walzen, Innenmischern und Mischextrudern, durchgeführt werden. Bevorzugte Mischtemperaturen liegen bei 50 bis 180°C.

Die erfindungsgemäßen Kautschukvulkanisate eignen sich zur Herstellung von Formkörpern, z.B. für die Herstellung von Kabelmänteln, Schläuchen, Treibriemen, Förderbändern, Walzenbelägen, Reifen, insbesondere Reifenlaufflächen, Schuhsohlen, Dichtungsringen und Dämpfungselementen.

## Beispiele

## Beispiel 1

(a) Vernetzung des BR-Kautschuks in Latexform

3071,7 g eines BR-Latex (GB 1/5) mit einer Teilchengröße von 87 nm (DVN) und einem Feststoffgehalt von 29,3 Gew.-% wurden in einem Autoklaven bei 60°C mit 13,5 g Dicumylperoxid (1,5 Gew.-% bezogen auf Festkautschuk) versetzt. Anschließend wurde unter Stickstoffatmosphäre 2 Stunden bei 60°C gerührt, dann auf 150°C aufgeheizt und 45 Minuten bei dieser Temperatur gerührt. Nach dem Abkühlen wurde durch ein Monodurtuch (Porenweite 0,2 mm) filtriert. Der vernetzte Kautschuklatex hatte einen Feststoffgehalt von 29,3 Gew.-%, der Quellungsindex betrug 4. Teilchendurchmesser: 85 nm.

(b) Modifizierung des vernetzten Kautschuklatex mit Schwefel und Natriumisopropylxanthogenat

3069 g des Latex gemäß Beispiel 1(a) wurden zusammen mit 34,4 g einer Schwefeldispersion mit einem Schwefelgehalt von 51 Gew.-%, die neben Schwefel 0,9 Gew.-% Dispergiermittel, 0,08 Gew.-% ZnO und 0,1 Gew.-% MgO enthielt, sowie 450 g Wasser vorgelegt. In diese Mischung wurde innerhalb von 15 Minuten eine Lösung von 13,14 g Na-isopropylxanthogenat in 657 g Wasser eingetropft und 5 Stunden auf 95°C erhitzt. Anschließend wurde bei 50°C eine Lösung von 4,5 g $K_2S_2O_8$ in 450 g Wasser zugetropft. Man ließ 30 Minuten bei 50°C nachrühren und erhielt 4678 g eines Latex von oberflächenmodifiziertem, vernetztem Kautschuk mit einem Feststoffgehalt von 21 %. Teilchendurchmesser: 85 nm (DVN). Der Modifizierungsgrad betrug 3 Gew.-% (bezogen auf Feststoff).

(c) Mischung des vernetzten, oberflächenmodifizierten BR-Kautschuks mit unvernetztem Naturkautschuk

7,143 kg des so behandelten Kautschuklatex wurden anschließend in eine Mischung aus 5 kg Naturkautschuklatex mit einem Feststoffgehalt von 30 Gew.-%, 300 g einer 5 %igen wäßrigen Harzseifenlösung (Dresinate 731, Hersteller Hercules) und 150 g einer 10 %igen wäßrigen Dispersion des Alterungsschutzmittels Vulkanox 4020 (Hersteller Bayer AG) eingerührt.

Die erhaltene Latexmischung enthielt vernetzten Kautschuk und Naturkautschuk im Gewichtsverhältnis 1:1.

(d) Koagulation des Latex

Zur Fällung von 3 kg Kautschukmischung wurden 12,593 kg der im Verfahrensschritt (c) gewonnenen Latexmischung bei 65°C in eine Lösung von 225 g NaCl, 40,8 g $Al_2(SO_4)_3$ x 18 $H_2O$, 4,5 g Gelatine in 301 Wasser eingerührt, wobei der pH-Wert durch Zugabe von 10%iger $H_2SO_4$ bei 4 gehalten wurde. Das Produkt wurde gründlich mit Wasser gewaschen und 2 Tage bei 70°C im Vakuum getrocknet.

Man erhielt 3 kg eines Masterbatchs bestehend aus 50 Gew.-% vernetzten, modifizierten BR-Kautschukteilchen und 50 Gew.-% Naturkautschuk.

## Beispiel 2

(a) Latex aus vernetztem Polybutadienkautschuk, hergestellt gemäß Beispiel 1(a)

(b) Modifizierung des vernetzten BR-Kautschuklatex mit Schwefel und Natriumdibenzyldithiocarbamat

3.068 g des Latex gemäß Beispiel 1(a) wurden zusammen mit 34,4 g einer Schwefeldispersion mit einem Schwefelgehalt von 51 Gew. -%, die neben Schwefel 0,9 Gew.-% Dispergiermittel, 0,08 Gew.-% ZnO und 0,1 Gew.-% MgO enthielt, und 27 g Emulgator Mersolat K 30 (Bayer AG) sowie 300 g Wasser vorgelegt. In diese Mischung wurde innerhalb von 15 Minuten eine Lösung von 49,1 g Na-Dibenzyldithiocarbamat in 393 g Wasser eingetropft und 5 Stunden auf 95°C erhitzt. Anschließend wurde bei 50°C eine Lösung von 9 g $K_2S_2O_8$ in 1.000 g Wasser zugetropft. Man ließ 30 Minuten bei 50°C nachrühren und erhielt 4.881 g eines Latex von modifiziertem, vernetztem Kautschuk mit einem Feststoffgehalt von 21 Gew.-%. Der Teilchendurchmesser betrug 85 nm (DVN). Modifizierungsgrad: 7 Gew.-% (bezogen auf Feststoff)

(c) Mischung des vernetzten, modifizierten BR-Kautschuks mit unvernetztem Naturkautschuk

Die Mischung wurde gemäß Beispiel 1(c) ausgeführt, wobei anstelle des modifizierten Latex 1(b) die gleiche Menge des entsprechenden Latex aus Beispiel 2(b) eingesetzt wurde.

(d) Koagulation des Latex

Die Koagulation wurde gemäß Beispiel 1(d) ausgeführt, wobei anstelle des Latex 1(c) die gleiche Menge des entsprechenden Latex aus Beispiel 2(c) eingesetzt wurde.

Man erhielt 3 kg eines Masterbatchs bestehend aus 50 Gew.-% vernetzten, modifizierten BR-Kautschukteilchen und 50 Gew.-% Naturkautschuk.

## Beispiel 3

(a) Vernetzung des SBR-Kautschuks in Latexform

Nach dem Verfahren von Beispiel 1(a) wurde ein Styrol/Butadien-Kautschuklatex (Baystal T 730/2) mit einem Feststoffgehalt von 30,2 Gew.-% einer Teilchengröße von ca. 400 nm (DVN) und einem Gehalt an einpolymerisiertem Styrol von 24 Gew.-% mit 1,5 Gew.-% Dicumylperoxid, bezogen auf Feststoffgehalt, vernetzt. Nach der Filtration durch ein Filtertuch erhielt man einen Latex aus vernetztem Kautschuk mit einem Feststoffgehalt von 30,18Gew.-%. Der Teilchendurchmesser betrug 400 nm.

(b) Modifizierung des vernetzten SBR-Kautschuklatex mit Schwefel und Natriumisopropylxanthogenat

2.982 g des Latex gemäß Beispiel 3(a) wurden zusammen mit 34,4 g einer Schwefeldispersion mit einem Schwefelgehalt von 51 Gew.-%, die neben Schwefel 0,9 Gew.-% Dispergiermittel, 0,08 Gew.-% ZnO und 0,1 Gew.-%

MgO enthielt, und 500 g Wasser vorgelegt. In diese Mischung wurde innerhalb von 15 Minuten eine Lösung von 13,14 g Na-isopropylxanthogenat in 644 g Wasser eingetropft und 5 Stunden auf 95°C erhitzt. Anschließend wurde bei 50°C eine Lösung von 4,5 g $K_2S_2O_8$ in 500 g Wasser zugetropft. Man ließ 30 Minuten bei 50°C nachrühren und erhielt 4.678 g eines Latex von modifiziertem, vernetztem SBR-Kautschuk mit einem Feststoffgehalt von 21 Gew.-%. Der Teilchendurchmesser betrug ca. 450 nm (DVN) und der Quellungsindex 5. Modifizierungsgrad: 3 Gew.-% (bezogen auf Feststoff).

(c) Mischung des vernetzten, modifizierten SBR-Kautschuks mit unvernetztem Naturkautschuk

Die Mischung wurde gemäß Beispiel 1(c) ausgeführt, wobei anstelle des modifizierten Latex 1(b) die gleiche Menge des entsprechenden Latex aus Beispiel 3(b) eingesetzt wurde.

(d) Koagulation des Latex

Die Koagulation wurde gemäß Beispiel 1(d) ausgeführt, wobei anstelle des Latex 1(c) die gleiche Menge des entsprechenden Latex aus Beispiel 3(c) eingesetzt wurde.
Man erhielt 3 kg eines Masterbatchs bestehend aus 50 Gew.-% vernetzten, modifizierten SBR-Kautschukteilchen und 50 Gew.% Naturkautschuk.

## Beispiel 4

Die folgenden Mischungen wurden in einem Innenmischer bei 130°C hergestellt. Zum Schluß wurden Schwefel und Beschleuniger auf der Walze bei 50°C zugegeben. Die Mengenangaben beziehen sich auf Gewichtsteile.

| | A | B | C | Vergleich |
|---|---|---|---|---|
| BR/NR-Masterbatch (50:50 Gew.-Teile) aus Bsp. 1d | 150 | - | - | - |
| BR/NR-Masterbatch (50:50 Gew.-Teile) aus Bsp. 2d | - | 150 | - | - |
| SBR/NR-Masterbatch (50:50 Gew.-Teile) aus Bsp. 3d | - | - | 150 | - |
| BR/NR-Masterbatch (50:50 Gew.-Teile) gemäß Bsp. 1 | - | - | - | 150 |
| jedoch ohne Modifizierungsreaktion (Schritt 1b) | | | | |
| Naturkautschuk TSR5 Defo 700 | 25 | 25 | 25 | 25 |
| Weichmacher Renopal 450 | 3 | 3 | 3 | 3 |
| Ozonschutzwachs Antilux L (Rheinchemie) | 1,5 | 1,5 | 1,5 | 1,5 |
| Stearinsäure | 3 | 3 | 3 | 3 |
| Zinkoxid | 3 | 3 | 3 | 3 |
| Antioxidans Vulkanox 4010 NA (Bayer AG) | 1 | 1 | 1 | 1 |
| Schwefel | 1,6 | 1,6 | 1,6 | 1,6 |
| N-tert.-Butyl-mercaptobenzthiazolsulfenamid Vulkacit NZ (Bayer AG) | 1 | 1 | 1 | 1 |
| Vulkanisationszeit bei 160°C in Minuten | 15 | 15 | 15 | 15 |
| Zugfestigkeit (Mpa) | 23,2 | 22,8 | 18,5 | 23,5 |
| Bruchdehnung (%) | 515 | 550 | 460 | 620 |
| Spannungswert bei 100 % Dehnung (Mpa) | 2,6 | 2,2 | 2,3 | 1,7 |
| Spannungswert bei 300% Dehnung (Mpa) | 12,4 | 10,3 | 11,7 | 8,8 |
| Härte bei 23°C (Shore A) | 66 | 63 | 59 | 61 |
| Rückprallelastizität bei 23°C (%) | 42 | 41 | 54 | 40 |
| Rückprallelastizität bei 70°C (%) | 62 | 61 | 71 | 56 |

Aus den Prüfergebnissen wird ersichtlich, daß die erfindungsgemäße Oberflächenbehandlung der Kautschukgele zu einer erheblichen Wirkungssteigerung geführt hat. So wird der Spannungswert bei 100 bis 300 % Dehnung deutlich angehoben und die Rückprallelastizität bei 70°C, die erfahrungsgemäß mit einem niedrigeren Rollwiderstand einhergeht, erhöht.

## Beispiel 5

(a) Vernetzung des SBR-Kautschuks in Latexform

Analog dem Verfahren von Beispiel 1(a) wird ein Styrol/Butadien-Latex mit 24,8 Gew.-% einpolymerisiertem Styrol bezogen auf Feststoff, einer Teilchengröße von 110 nm (DVN) und einem Feststoffgehalt von 30 Gew.-% mit 1,5 Gew.-% Dicumylperoxid bezogedn auf Polymer vernetzt. Es wurde ein Kautschuklatex mit einem Feststoffgehalt von 30,1 Gew.-% erhalten. Das Kautschukgel besaß einen Quellungsindex von 12,1.

(b) Modifizierung des vernetzten SBR-Kautschuklatex mit 1,6-hexandithiol

2.990 g des Latex gemäß Beispiel 5(a) wurden zusammen mit 27 g Emulgator Mersolat K 30 (Bayer AG), 20,02 g 1,6-Hexandithiol und 1000 g Wasser vorgelegt. In diese Mischung wurde innerhalb von 3 Stunden bei 30°C eine Lösung von 18 g Kaliumperoxodisulfat in 770 g Wasser eingetropft und 1 Stunde auf 70°C erhitzt. Man erhielt 4.825 g eines Latex von modifiziertem, vernetztem SBR-Kautschuk mit einem Feststoffgehalt von 20,5 Gew.-%. Der Teilchendurchmesser betrug ca. 121 nm (DVN) und der Quellungsindex 5. Modifizierungsgrad: 2,2 Gew.-% (bezogen auf Feststoff).

(c) Mischung des vernetzten, modifizierten SBR-Kautschuks mit unvernetztem Naturkautschuk

Die Mischung wurde gemäß Beispiel 1(c) ausgeführt, wobei anstelle des modifizierten Latex 1(b) die gleiche Menge des entsprechenden Latex aus Beispiel 5(b) eingesetzt wurde.

(d) Koagulation des Latex

Die Koagulation wurde gemäß Beispiel 1(d) ausgeführt, wobei anstelle des Latex 1(c) der entsprechende Latex aus Beispiel 5(c) eingesetzt wurde.

Man erhielt 3 kg eines Masterbatchs bestehend aus 50 Gew.-% vernetzten, modifizierten SBR-Kautschukteilchen und 50 Gew.-% Naturkautschuk.

## Beispiel 6

Die folgenden Mischungen wurden in einem Innenmischer bei 130°C hergestellt. Zum Schluß wurden Schwefel und Beschleuniger auf der Walze bei 50°C zugegeben. Die Mengenangaben beziehen sich auf Gewichtsteile.

|  | A | Vergleich |
|---|---|---|
| SBR/NR-Masterbatch (50:50 Gew.-Teile) aus Bsp. 5d | 150 | - |
| SBR/NR-Masterbatch (50:50 Gew.-Teile) aus Bsp. 5 | - | 150 |
| jedoch ohne Modifizierungsreaktion (Schritt 5b) |  |  |
| Naturkautschuk (TSR5 Defo 700 | 25 | 25 |
| Weichmacher Renopal 450 | 3 | 3 |
| Ozonschutzwachs Antilux L (Rheinchemie) | 1,5 | 1,5 |
| Stearinsäure | 3 | 3 |
| Zinkoxid | 3 | 3 |
| Antioxidans Vulkanox 4010 NA (Bayer AG) | 1 | 1 |
| Schwefel | 1,6 | 1,6 |
| N-tert.-Butyl-mercaptobenzthiazolsulfenamid Vulkacit NZ (Bayer AG) | 1 | 1 |
| Vulkanisationszeit bei 160°C in Minuten | 15 | 15 |
| Zugfestigkeit (Mpa) | 23,8 | 21,1 |
| Bruchdehnung (%) | 565 | 585 |
| Spannungswert bei 100 % Dehnung (Mpa) | 2,5 | 2 |
| Spannungswert bei 300 % Dehnung (Mpa) | 9,7 | 8,6 |
| Härte bei 23°C (Shore A) | 72 | 63 |
| Rückprallelastizität bei 23°C (%) | 36 | 35 |

(fortgesetzt)

| | A | Vergleich |
|---|---|---|
| jedoch ohne Modifizierungsreaktion (Schritt 5b) | | |
| Rückprallelastizität bei 70°C (%) | 48 | 52 |

**Patentansprüche**

1. Kautschukmischungen aus mindestens einem mit gegenüber C=C-Doppelbindungen reaktiven schwefelhaltigen Verbindungen modifiziertem Kautschukgel (A) mit einem Quellungsindex in Toluol von 1 bis 15 und einer Teilchengröße von 5 bis 2000 nm und mindestens einem doppelbindungshaltigen Kautschuk (B), wobei der Anteil an modifiziertem Kautschukgel 1 bis 100 Gewichtsteile, bezogen auf 100 Gewichtsteile C=C-doppelbindungshaltigem Kautschuk, beträgt und wobei das Kautschukgel aus der Umsetzung von 0,05 bis 20 Gewichtsteilen einer gegenüber C=C-Doppelbindungen reaktiven, schwefelhaltigen Verbindung mit 100 Gew.-Teilen Kautschukgel erhalten wurde.

2. Verwendung der Kautschukmischungen nach Anspruch 1 zur Herstellung von Kautschukvulkanisaten.

3. Verwendung der Kautschukmischungen nach Anspruch 1 zur Herstellung von Formkörpern, insbesondere Reifenlaufflächen.

**Claims**

1. Rubber mixtures prepared from at least one rubber gel modified with compounds containing sulphur which are reactive towards C=C double bonds (A) with a swelling index in toluene of 1 to 15 and a particle size of 5 to 2000 nm and at least one rubber containing double bonds (B), wherein the proportion of modified rubber gel is 1 to 100 parts by weight, relative to 100 parts by weight of rubber containing C=C double bonds, and wherein the rubber gel has been obtained by reacting 0.05 to 20 parts by weight of a compound containing sulphur which is reactive towards C=C double bonds with 100 parts by weight of rubber gel.

2. Use of the rubber mixtures according to claim 1 for the production of rubber vulcanisates.

3. Use of the rubber mixtures according to claim 1 for the production of mouldings, in particular tyre treads.

**Revendications**

1. Mélanges de caoutchoucs consistant en au moins un gel de caoutchouc (A) modifié par des composés sulfurés réactifs avec les doubles liaisons C=C, ayant un indice de gonflement dans le toluène de 1 à 15 et une dimension de particule de 5 à 200 nm, et au moins un caoutchouc (B) à doubles liaisons, la proportion du gel de caoutchouc modifié étant de 1 à 100 parties en poids pour 100 parties en poids du caoutchouc à doubles liaisons C=C et le gel de caoutchouc ayant été obtenu par réaction de 0,05 à 20 parties en poids d'un composé sulfuré réactif avec les doubles liaisons C=C avec 100 parties en poids de gel de caoutchouc.

2. Utilisation des mélanges de caoutchoucs selon la revendication 1 pour la fabrication de vulcanisats de caoutchouc.

3. Utilisation des mélanges de caoutchoucs selon la revendication 1 pour la fabrication d'objets moulés, et en particulier de bandes de roulement de pneumatiques.